(19) Europäisches Patentamt
European Patent Office
Office européen des brevets

(11) **EP 4 589 328 A1**

(12) **EUROPEAN PATENT APPLICATION**
published in accordance with Art. 153(4) EPC

(43) Date of publication:
**23.07.2025 Bulletin 2025/30**

(21) Application number: **22961801.2**

(22) Date of filing: **14.10.2022**

(51) International Patent Classification (IPC):
**G01S 5/12** (2006.01)  **H04W 64/00** (2009.01)

(52) Cooperative Patent Classification (CPC):
**G01S 11/02; G01S 7/006; G01S 13/003;
G01S 13/106; H04W 4/02**

(86) International application number:
**PCT/CN2022/125485**

(87) International publication number:
**WO 2024/077615 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHOU, Baojian
Shenzhen, Guangdong 518129 (CN)**

• **LUO, Jiajin
Shenzhen, Guangdong 518129 (CN)**
• **PENG, Xiaohui
Shenzhen, Guangdong 518129 (CN)**
• **HE, Jia
Shenzhen, Guangdong 518129 (CN)**
• **YAN, Min
Shenzhen, Guangdong 518129 (CN)**
• **YANG, Xun
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **RANGING METHOD AND APPARATUS**

(57)    A ranging method and apparatus are provided, which relate to the communication field. The ranging method includes: receiving, by a first communication apparatus, a first ranging signal formed after a second ranging signal from a second communication apparatus passes through a channel, and information that corresponds to the second ranging signal and that indicates a time domain sequence or a frequency domain sequence of the second ranging signal (S141), where the time domain sequence or the frequency domain sequence of the second ranging signal is determined based on channel state information obtained by the first communication apparatus through measurement; and performing ranging based on the first ranging signal and the time domain sequence or the frequency domain sequence of the second ranging signal (S142). In this way, ranging accuracy is improved.

```
┌──────────┐                              ┌──────────┐
│ Network  │                              │ Terminal │
│ device   │                              │          │
└────┬─────┘                              └────┬─────┘
     │      S141: Second ranging signal and    │
     │      information corresponding to the    │
     │         second ranging signal            │
     │ ─────────────────────────────────────►  │
     │                              ┌───────────┴──────────────────┐
     │                              │ S142: Perform ranging based  │
     │                              │ on a first ranging signal    │
     │                              │ formed after the second      │
     │                              │ ranging signal passes through│
     │                              │ a channel and the information│
     │                              │ corresponding to the second  │
     │                              │ ranging signal               │
     │                              └───────────┬──────────────────┘
```

FIG. 14

EP 4 589 328 A1

**Description**

**TECHNICAL FIELD**

This application relates to the communication field, and in particular, to a ranging method and apparatus.

**BACKGROUND**

Ranging is one of key steps for implementing a positioning function in various wireless systems such as a cellular (long term evolution (long term evolution, LTE) system, a new radio (new radio, NR), or the like) system, and a wireless network communication technology (wireless fidelity, Wi-Fi) system. Sending and receiving a specific signal to measure a propagation distance of the signal is ranging. A device sending a signal and a device receiving a signal are respectively referred to as a transmitter and a receiver. Existing reference signals such as a sounding reference signal (Sounding reference signal, SRS) and a positioning reference signal (Positioning reference signal, PRS) may be used for ranging, but ranging accuracy is low and needs to be improved.

**SUMMARY**

Embodiments of this application provide a ranging method and apparatus, to resolve a problem of low ranging accuracy in an existing ranging method.

To achieve the foregoing objective, the following technical solutions are used in embodiments of this application.

According to a first aspect, a ranging method is provided. The method includes: receiving, by a first communication apparatus, a first ranging signal formed after a second ranging signal from a second communication apparatus passes through a channel, and information that corresponds to the second ranging signal and that indicates a time domain sequence or a frequency domain sequence of the second ranging signal, where the time domain sequence or the frequency domain sequence is determined based on channel state information obtained by the first communication apparatus through measurement; and performing ranging based on the first ranging signal and the time domain sequence or the frequency domain sequence of the second ranging signal.

In this embodiment of this application, ranging is performed based on the first ranging signal formed after the second ranging signal passes through the channel and the information (the time domain sequence or the frequency domain sequence) about the second ranging signal. The time domain sequence or the frequency domain sequence is determined based on the channel state information obtained by the first communication apparatus through measurement. In other words, a time domain sequence or a frequency domain sequence of a ranging signal may be dynamically selected based on a channel state, to improve ranging accuracy.

In a possible design, the time domain sequence includes a discrete sequence obtained through time and amplitude discretization of the second ranging signal in time domain. The frequency domain sequence includes a resource unit of the second ranging signal in frequency domain and a value corresponding to the resource unit.

In this embodiment of this application, the sequence obtained through time and amplitude discretization of the second ranging signal in time domain is used as the time domain sequence, and the resource unit of the second ranging signal in frequency domain and the value corresponding to the resource unit are used as the frequency domain sequence, so that both the frequency domain sequence and the time domain sequence can represent a feature of the second ranging signal.

In a possible design, the time domain sequence or the frequency domain sequence of the second ranging signal is determined based on a power allocation priority of a resource unit of the first communication apparatus, and the power allocation priority is determined based on the channel state information corresponding to the resource unit.

In this embodiment of this application, the power allocation priority of the resource unit is determined based on the channel state information corresponding to the resource unit, and the power allocation priority can be used to determine the time domain sequence or the frequency domain sequence of the second ranging signal. The resource unit for generating the second ranging signal is selected based on the power allocation priority of the resource unit, and a channel gain of the selected resource unit is strong. When total allocated power is limited, the second ranging signal is generated based on the selected resource unit, so that a product of a root mean square bandwidth and a square root of an SNR of the signal can be maximized, to improve ranging accuracy.

Further, the time domain sequence or the frequency domain sequence of the second ranging signal is determined based on the power allocation priority, so that both the frequency domain sequence and the time domain sequence can represent the feature of the second ranging signal.

In a possible design, the method may further include: sending an ordered resource unit set to the second communication apparatus. The ordered resource unit set indicates the resource unit and the power allocation priority corresponding to the resource unit.

In this embodiment of this application, the first communication apparatus sends the ordered resource unit set to the second communication apparatus, to provide a way for the second communication apparatus to determine the resource unit and the power allocation priority corresponding to the resource unit. The power allocation priority is indicated based on the ordered resource unit set, so that a resource unit granularity is finer, and a resource unit sorting form is more flexible, so that the power allocation priority is more flexible.

In a possible design, the method may further include: receiving a first resource unit set from the second communication apparatus. The ordered resource unit set may be selected from the first resource unit set.

In this embodiment of this application, the second communication apparatus sends the first resource unit set to the first communication apparatus, and the ordered resource unit set may be selected from the first resource unit set, so that the selected ordered resource unit set can meet a requirement of the second communication apparatus.

In a possible design, the resource unit includes any one of the following: a subcarrier, a resource block, a component carrier, and a subband.

In this embodiment of this application, considering that in an actual application scenario, the resource unit may be a subcarrier, a resource block, a component carrier, or a subband, an ordered resource unit set is separately designed for various types of resource units, so that this embodiment of this application may be applicable to a plurality of communication scenarios.

In a possible design, the method may further include: when the resource unit is a subcarrier or a resource block, receiving, from the second communication apparatus, first information used to determine a quantity of subcarriers or a quantity of resource blocks.

In this embodiment of this application, the first information is set to limit a maximum quantity of resource units included in the ordered resource unit set and reduce a size of an ordered resource unit, so that fewer signaling resources are consumed when the ordered resource unit is transmitted, and a communication system that has a large limitation on a resource occupied by communication can be satisfied.

In a possible design, when the resource unit is a component carrier or a subband, the ordered resource unit set includes a component carrier with a highest priority or a subband with a highest priority.

In this embodiment of this application, when the resource unit is a component carrier or a subband, the ordered resource unit set is set to include the component carrier with the highest priority or the subband with the highest priority, which complies with a resource unit setting of an existing communication system.

In a possible design, when the resource unit is a subcarrier, the channel state information includes a channel amplitude value $h_k$ at a frequency $f_k$ of each subcarrier, and the power allocation priority $p_k$ of the resource unit is calculated according to the following formula:

$$p_k = |h_k f_k|$$

In this embodiment of this application, for a scenario in which the resource unit is a subcarrier, a corresponding calculation method for the power allocation priority is designed, so that the method can be applicable to calculation of the power allocation priority in the scenario in which the resource unit is a subcarrier.

In a possible design, when the resource unit is a resource block, a component carrier, or a subband, the channel state information includes a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$p_j = \sum_k h_k^2 f_k^2$$

In this embodiment of this application, for a scenario in which the resource unit is a resource block, a component carrier, or a subband, a corresponding calculation method for the power allocation priority is designed, so that the method can be applicable to calculation of the power allocation priority in the scenario in which the resource unit is a resource block, a component carrier, or a subband.

In a possible design, the frequency is a baseband frequency or a radio frequency. The method may further include: receiving, from the second communication apparatus, second information that indicates to use the baseband frequency or the radio frequency to determine the power allocation priority.

In this embodiment of this application, considering that an unambiguous range of ranging is large when ranging is performed based on the baseband frequency, a distance of a target can be determined in a large range. When ranging is performed by using the radio frequency, the unambiguous range of ranging is small but accuracy is high, so that ranging can be accurately performed on the target within a small range. The second communication apparatus indicates, based on a ranging scenario by using the second information, to use the baseband frequency or the radio frequency to determine the power allocation priority, so that ranging effect meets a ranging requirement.

According to a second aspect, a ranging method is provided. The method includes: sending, by a second communication apparatus to a first communication apparatus, a second ranging signal and information indicating a time domain sequence or a frequency domain sequence of the second ranging signal, where the time domain sequence or the frequency domain sequence is determined based on channel state information obtained by the first communication apparatus through measurement.

In this embodiment of this application, the second communication apparatus sends, to the first communication apparatus, the second ranging signal and the information indicating the time domain sequence or the frequency domain sequence of the second ranging signal. The first ranging signal formed after the second ranging signal passes through the channel and the information (the time domain sequence or the frequency domain sequence) about the second ranging signal may be used to perform ranging. The time domain sequence or the frequency domain sequence is determined based on the channel state information obtained by the first communication apparatus through measurement. In other words, a time domain sequence or a frequency domain sequence of a ranging signal may be dynamically selected based on a channel state, to improve ranging accuracy.

In a possible design, the time domain sequence includes a discrete sequence obtained through time and amplitude discretization of the second ranging signal in time domain. The frequency domain sequence includes a resource unit of the second ranging signal in frequency domain and a value corresponding to the resource unit.

In this embodiment of this application, the sequence obtained through time and amplitude discretization of the second ranging signal in time domain is used as the time domain sequence, and the resource unit of the second ranging signal in frequency domain and the value corresponding to the resource unit are used as the frequency domain sequence, so that both the frequency domain sequence and the time domain sequence can represent a feature of the second ranging signal.

In a possible design, the time domain sequence or the frequency domain sequence of the second ranging signal is determined based on a power allocation priority of a resource unit of the first communication apparatus, and the power allocation priority is determined based on the channel state information corresponding to the resource unit.

In this embodiment of this application, the power allocation priority of the resource unit is determined based on the channel state information corresponding to the resource unit, and the power allocation priority can be used to determine the time domain sequence or the frequency domain sequence of the second ranging signal. The resource unit for generating the second ranging signal is selected based on the power allocation priority of the resource unit, and a channel gain of the selected resource unit is strong. When total allocated power is limited, the second ranging signal is generated based on the selected resource unit, so that a product of a root mean square bandwidth and a square root of an SNR of the signal can be maximized, to improve ranging accuracy.

In a possible design, the method further includes: receiving, from the first communication apparatus, an ordered resource unit set indicating the resource unit and the power allocation priority corresponding to the resource unit.

In this embodiment of this application, the first communication apparatus sends the ordered resource unit set to the second communication apparatus, to provide a way for the second communication apparatus to determine the resource unit and the power allocation priority corresponding to the resource unit.

In a possible design, the method further includes: sending, to the first communication apparatus, a first resource unit set for selecting the ordered resource unit set.

In this embodiment of this application, the second communication apparatus sends the first resource unit set to the first communication apparatus, and the ordered resource unit set may be selected from the first resource unit set, so that the selected ordered resource unit set can meet a requirement of the second communication apparatus.

In a possible design, the resource unit includes any one of the following: a subcarrier, a resource block, a component carrier, and a subband.

In this embodiment of this application, considering that in an actual application scenario, the resource unit may be a subcarrier, a resource block, a component carrier, or a subband, an ordered resource unit set is separately designed for various types of resource units, so that this embodiment of this application may be applicable to a plurality of communication scenarios.

In a possible design, the method further includes: when the resource unit is a subcarrier or a resource block, sending, to the first communication apparatus, first information used to determine a quantity of subcarriers or a quantity of resource blocks.

In this embodiment of this application, the first information is set to limit a maximum quantity of resource units included in the ordered resource unit set and reduce a size of an ordered resource unit, so that fewer signaling resources are consumed when the ordered resource unit is transmitted, and a communication system that has a large limitation on a resource occupied by communication can be satisfied.

In a possible design, when the resource unit is a component carrier or a subband, the ordered resource unit set includes a component carrier with a highest priority or a subband with a highest priority.

In this embodiment of this application, when the resource unit is a component carrier or a subband, the ordered resource unit set is set to include the component carrier with the highest priority or the subband with the highest priority, which complies with a resource unit setting of an existing communication system.

In a possible design, when the resource unit is a subcarrier, the channel state information includes a channel amplitude value $h_k$ at a frequency $f_k$ of each subcarrier, and the power allocation priority $p_k$ of the resource unit is calculated according to the following formula:

$$\mathrm{p_k} = |h_k f_k|$$

In this embodiment of this application, for a scenario in which the resource unit is a subcarrier, a corresponding calculation method for the power allocation priority is designed, so that the method can be applicable to calculation of the power allocation priority in the scenario in which the resource unit is a subcarrier.

In a possible design, when the resource unit is a resource block, a component carrier, or a subband, the channel state information includes a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$\mathrm{p_j} = \sum_k h_k^2 f_k^2$$

In this embodiment of this application, for a scenario in which the resource unit is a resource block, a component carrier, or a subband, a corresponding calculation method for the power allocation priority is designed, so that the method can be applicable to calculation of the power allocation priority in the scenario in which the resource unit is a resource block, a component carrier, or a subband.

In a possible design, the frequency is a baseband frequency or a radio frequency. The method may further include: sending, to the first communication apparatus, second information that indicates to use the baseband frequency or the radio frequency to determine the power allocation priority.

In this embodiment of this application, considering that an unambiguous range of ranging is large when ranging is performed based on the baseband frequency, a distance of a target can be determined in a large range. When ranging is performed by using the radio frequency, the unambiguous range of ranging is small but accuracy is high, so that ranging can be accurately performed on the target within a small range. The second communication apparatus indicates, based on a ranging scenario by using the second information, to use the baseband frequency or the radio frequency to determine the power allocation priority, so that ranging effect meets a ranging requirement.

According to a third aspect, an embodiment of this application provides a ranging apparatus. The ranging apparatus may be a first communication apparatus or a chip or a system-on-a-chip in a first communication apparatus. The ranging apparatus may implement functions performed by the first communication apparatus according to possible designs of the first aspect or the second aspect. The functions may be implemented by hardware, or may be implemented by hardware executing corresponding software. The hardware or the software includes one or more modules corresponding to the foregoing functions.

According to a fourth aspect, this application provides a ranging apparatus. The ranging apparatus may be a second communication apparatus or a chip or a system-on-a-chip in a second communication apparatus. The ranging apparatus may implement functions performed by the second communication apparatus according to possible designs of the first aspect or the second aspect. The functions may be implemented by hardware, or may be implemented by hardware executing corresponding software. The hardware or the software includes one or more modules corresponding to the foregoing functions.

According to a fifth aspect, this application provides a communication apparatus. The communication apparatus includes a processor. The processor is configured to enable, by running computer instructions and/or by using a logic circuit, the communication apparatus to perform the method according to the first aspect or the second aspect.

In a possible implementation, the communication apparatus further includes a memory, and the memory is configured to store the computer instructions and/or a configuration file of the logic circuit.

In a possible implementation, the communication apparatus further includes a transceiver, and the transceiver is configured to receive and/or send a signal.

In a possible implementation, the communication apparatus is a chip.

According to a sixth aspect, this application provides a computer-readable storage medium. The computer-readable storage medium stores computer instructions. When the computer instructions are run, the method according to the first aspect or the second aspect is performed.

According to a seventh aspect, this application provides a computer program product including instructions. When the computer program product is run on a computer, the computer is enabled to perform the method according to the first aspect or the second aspect.

According to an eighth aspect, this application provides a communication system. The communication system includes the communication apparatus according to the third aspect and the communication apparatus according to the fourth aspect.

For beneficial effect described in the third aspect to the eighth aspect of this application, correspondingly refer to analysis of beneficial effect in the first aspect or the second aspect. Details are not described herein again.

## BRIEF DESCRIPTION OF DRAWINGS

FIG. 1 is a diagram of distribution of power spectral densities of different signals with equal power according to an embodiment of this application;

FIG. 2 is a diagram of an active target ranging scenario in which a receiver and a transmitter are separately located according to an embodiment of this application;

FIG. 3 is a diagram of a passive target ranging scenario in which a receiver and a transmitter are co-located according to an embodiment of this application;

FIG. 4 is a diagram of a passive target ranging scenario in which a receiver and a transmitter are separately located according to an embodiment of this application;

FIG. 5 is a diagram of another passive target ranging scenario in which a receiver and a transmitter are separately located according to an embodiment of this application;

FIG. 6 is a diagram of another passive target ranging scenario in which a receiver and a transmitter are separately located according to an embodiment of this application;

FIG. 7 is a diagram of a process of matched filtering according to an embodiment of this application;

FIG. 8 is a diagram of distribution of output results of matched filtering according to an embodiment of this application;

FIG. 9 is a diagram of a response of a multipath channel in time domain according to an embodiment of this application;

FIG. 10 is a diagram of a response of a multipath channel in frequency domain according to an embodiment of this application;

FIG. 11 is a diagram of distribution of a sounding reference signal and a positioning reference signal in frequency domain according to an embodiment of this application;

FIG. 12 is a diagram of signal power allocation in an orthogonal frequency division multiplexing system according to an embodiment of this application;

FIG. 13 is a diagram of a structure of a communication system according to an embodiment of this application;

FIG. 14 is a diagram of an interaction procedure of a ranging method according to an embodiment of this application;

FIG. 15 is a diagram of an interaction procedure of another ranging method according to an embodiment of this application;

FIG. 16 is a diagram of an interaction procedure of another ranging method according to an embodiment of this application;

FIG. 17 is a diagram of an interaction procedure of another ranging method according to an embodiment of this application;

FIG. 18 is a diagram of a structure of a communication apparatus according to an embodiment of this application;

FIG. 19 is a diagram of a structure of another communication apparatus according to an embodiment of this application; and

FIG. 20 is a diagram of a structure of another communication apparatus according to an embodiment of this application.

## DESCRIPTION OF EMBODIMENTS

The following describes technical solutions in embodiments of this application with reference to accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, the term such as "example" or "for example" in embodiments of this application represents giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to a similar technical problem.

Before embodiments of this application are described, some terms in embodiments of this application are explained.

Root mean square bandwidth (root mean square bandwidth, RMS BW): A root mean square bandwidth of a time domain signal $s(t)$ is defined as follows:

$$B_{RMS} = \sqrt{\frac{\int_{-\infty}^{\infty} |S(f)|^2 f^2 df}{\int_{-\infty}^{\infty} |S(f)|^2 df}}$$

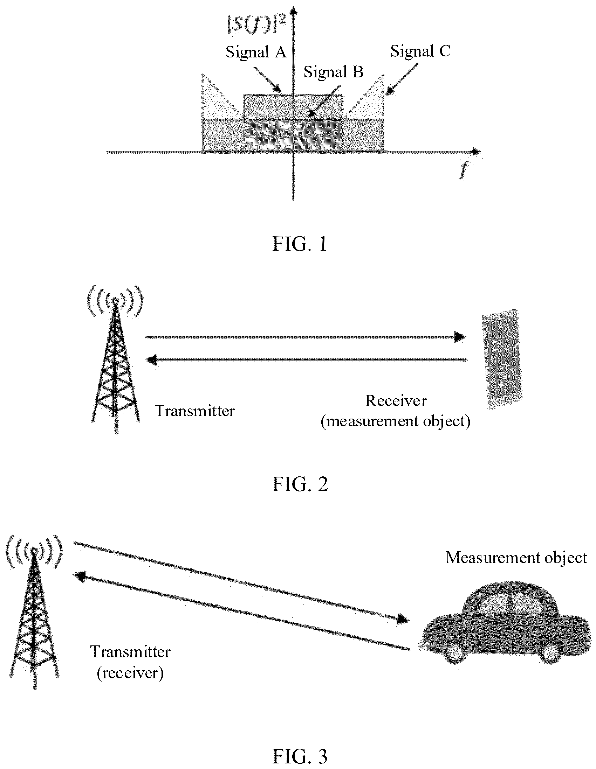

$f$ is a frequency, $S(f)$ is a Fourier transform (that is, a spectrum) of the signal, and $|S(f)|^2$ is a power spectral density of the signal. Signals with same power and a same maximum frequency may not have a same root mean square bandwidth. FIG. 1 is used as an example. Signals A, B, and C have same power but different distribution of power spectral densities. Therefore, root mean square bandwidths of the signals are different, and are sequentially A < B < C.

Cramer-Rao lower bound (Cramer-Rao lower bound, CRLB/CRB): A ranging system usually uses an unbiased estimator for ranging. The CRLB is a lower bound of variance of the unbiased estimator and describes best performance that the unbiased estimator can achieve. Based on a CRLB principle, in a case of white Gaussian noise, a lower bound of accuracy ε of ranging performed by using a signal $s(t)$ is inversely proportional to a root mean square bandwidth of s(t), and is also inversely proportional to a square root of a signal-to-noise ratio (signal-to-noise ratio, SNR). That is, a larger root mean square bandwidth and a larger SNR indicate a smaller lower bound of the ranging accuracy, higher ranging accuracy, and better ranging performance, which is expressed as a formula:

$$\epsilon \geq \frac{\alpha}{\sqrt{SNR \cdot B_{RMS}}}$$

α is a constant. Therefore, to obtain higher ranging accuracy, an SNR or a root mean square bandwidth of a received signal needs to be increased. In an existing signal power allocation method, average power allocation or power allocation for a fixed frequency band is usually used, and a formed power spectrum cannot maximize a product of a square root of an SNR and a root mean square bandwidth, resulting in low ranging accuracy.

Range ambiguity (range ambiguity): Range ambiguity is a phenomenon in which a ranging system cannot determine a true position of a target among a plurality of possible positions in some ranging situations. Occurrence of range ambiguity is related to a ranging signal used by a ranging system. When different signals are used for ranging, unambiguous ranges of the signals differ. For example, an unambiguous range of a single-carrier signal is a wavelength of the single-carrier signal, an unambiguous range of a dual-carrier signal is a signal propagation speed divided by a frequency difference of dual carriers, and an unambiguous range of an orthogonal frequency division multiplexing (orthogonal frequency division multiplexing, OFDM) signal is a signal propagation speed divided by a subcarrier frequency spacing.

A premise for using a CRLB to measure ranging accuracy is that there is no range ambiguity, because when there is range ambiguity, an estimator of the ranging system may become a biased estimator, but the CRLB is only applicable to an unbiased estimator.

Line of sight (line of sight, LOS) and non-line of sight (non-line of sight, NLOS): A direct signal transmission path from a transmitter to a receiver is the LOS, and a signal transmission path from the transmitter to the receiver through reflection by an object is the NLOS.

Multipath environment: The multipath environment means that a ranging signal may reach a receiver through a LOS or an NLOS.

Sending and receiving a specific signal and measuring a propagation distance of the signal are ranging. A device sending a signal and a device receiving a signal are respectively referred to as a transmitter and a receiver. The transmitter and the receiver may be the same device, or may be different devices. The transmitter and the receiver may be placed in a same position or even share an antenna, or the transmitter and the receiver may be placed separately. The former is referred to as that the receiver and the transmitter are co-located, and the latter is referred to as that the receiver and the transmitter are separately located. In various ranging scenarios, active target ranging and passive target ranging are included.

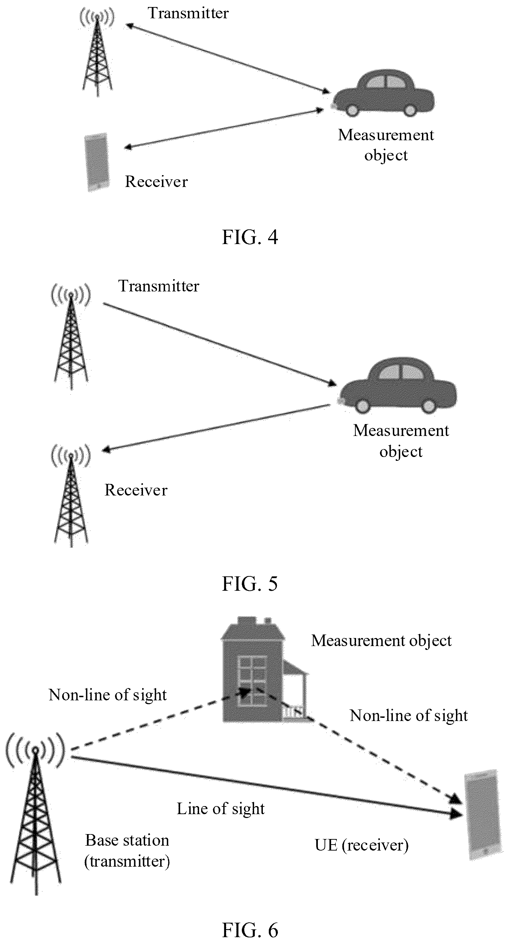

For example, as shown in FIG. 2, a transmitter and a receiver are different devices, a ranging object is the receiver, and this is an active target ranging scenario in which the receiver and the transmitter are separately located. As shown in FIG. 3, a transmitter and a receiver are the same device, a ranging object is neither the transmitter nor the receiver, and this is a passive target ranging scenario in which the receiver and the transmitter are co-located. As shown in FIG. 4, a transmitter and a receiver are different devices, a ranging object is neither the receiver nor the transmitter, and this is a passive target ranging scenario in which the receiver and the transmitter are separately located. As shown in FIG. 5, a transmitter and a receiver are different devices, a ranging object is neither the receiver nor the transmitter, and a difference between FIG. 5 and the scenario shown in FIG. 4 lies in that device types of the transmitter and the receiver are the same. However, this is still a passive target ranging scenario in which the receiver and the transmitter are separately located.

For example, FIG. 6 is a diagram of a passive target ranging scenario in which a receiver and a transmitter are separately located, where a base station serves as the transmitter to send a signal, and a terminal serves as the receiver to receive the signal. The terminal obtains a signal propagation distance based on matched filtering processing on a received signal. The measured distance includes two values: a length of a LOS and a length of an NLOS. A direct signal transmission path from the transmitter to the receiver is the LOS, and a signal transmission path from the transmitter to the receiver through reflection by an object is the NLOS. Which one of the two values is used depends on actual application.

A procedure of a ranging method based on matched filtering is as follows: (1) The transmitter and the receiver specify a sent signal in advance; (2) the transmitter sends the signal, and the receiver receives the signal; and (3) the receiver performs a matched filtering operation based on the specified sent signal, estimates a signal propagation delay, and finally calculates a signal propagation distance based on a signal propagation speed and the delay.

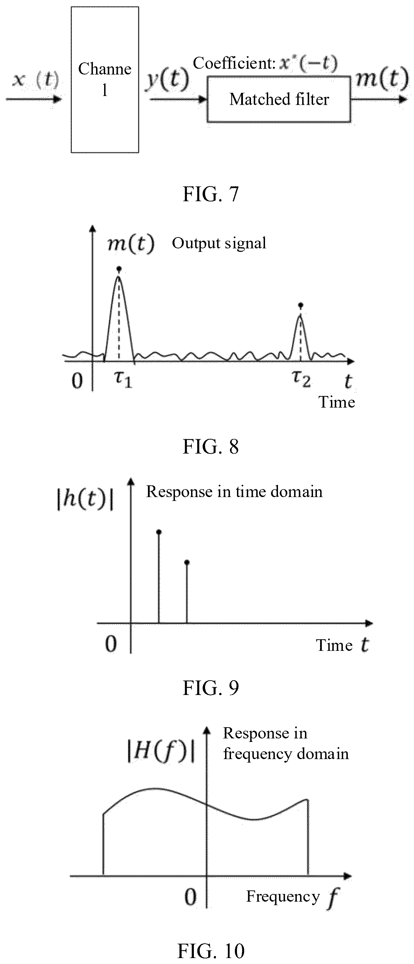

A process of matched filtering is shown in FIG. 7, where is $x(t)$ the sent signal, $y(t)$ is a received signal formed after the sent signal $x(t)$ passes through a channel, $x^*(-t)$ is a filter coefficient used by a matched filter, and $m(t)$ is a signal output by the matched filter. An example of output of matched filtering is shown in FIG. 8. $\tau_1$ corresponds to a line of sight, and $\tau_2$ corresponds to a non-line of sight. This output result corresponds to the scenario in FIG. 6, that is, two peak values output by matched filtering correspond to the LOS and the NLOS respectively. The signal propagation speed is fixed. A propagation delay of the signal along a path (LOS or NLOS) may be estimated based on a moment corresponding to the peak value output by matched filtering, so that a length of a multipath is estimated with reference to the signal propagation speed, that is, a ranging function is implemented.

Distribution of power of a signal on frequencies is referred to as a power spectrum. On a premise that power is the same, root mean square bandwidths of the signal are usually different if power spectra are different. In the multipath environment, a channel is non-flat in frequency. As shown in FIG. 9, a response of a multipath channel in time domain is $h(t)$, where two multipaths are included. A frequency domain response $H(f)$ corresponding to the multipath channel is shown in FIG. 10. It can be seen that distribution of an amplitude of the frequency domain response in frequency domain is not flat. After the signal passes through a channel that is non-flat in frequency domain, the power spectrum of the signal changes due to effect of the channel. As a result, the root mean square bandwidth and an SNR of the signal change, and finally ranging accuracy of the signal is affected.

An existing 5G NR standard specifies that reference signals used for positioning in an uplink and a downlink are an SRS and a PRS respectively. These positioning reference signals may be used for ranging in practice. Actually, methods such as positioning based on round trip time (round trip time, RTT) and positioning based on a time difference of arrival (time difference of arrival, TDOA) are all implemented based on ranging.

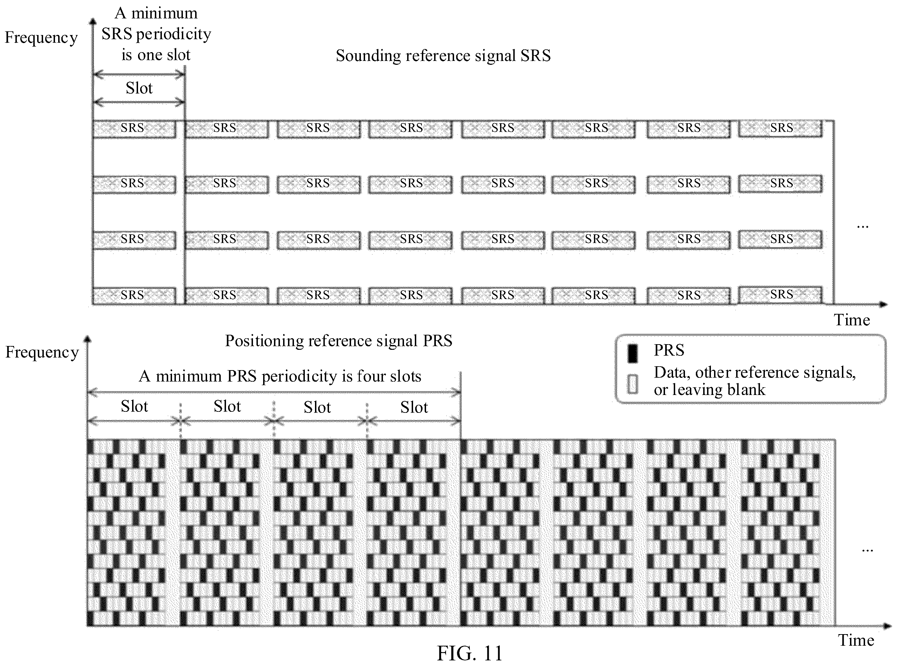

As shown in FIG. 11, SRSs and PRSs are evenly distributed at a specific spacing in frequency domain. In addition, either the SRS or the PRS has same power at different frequencies. In the multipath environment, in this power allocation mode, the power spectrum of the signal cannot be adjusted based on a channel response, resulting in poor ranging accuracy.

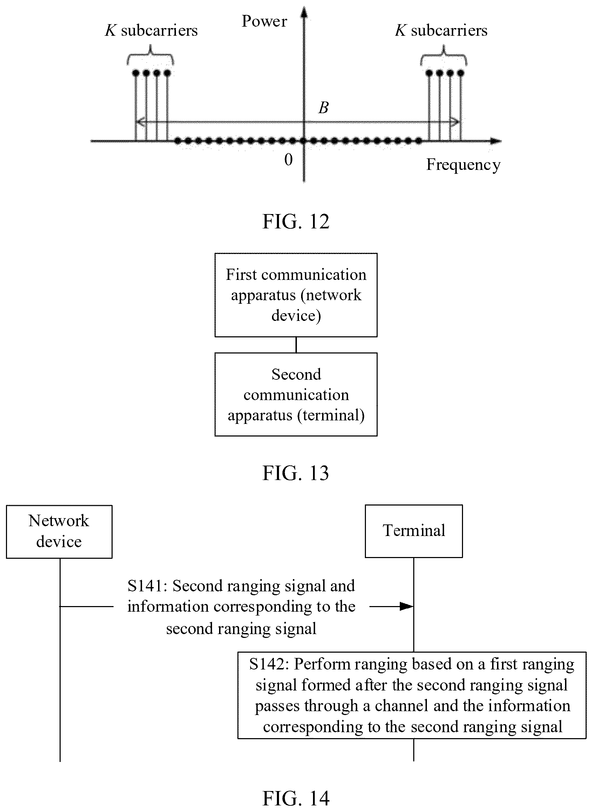

In an OFDM system, as shown in FIG. 12, signal power is allocated to K subcarriers on both sides of a signal bandwidth, and no signal power is allocated to subcarriers in a middle of the signal bandwidth. If an amplitude of channel gains on the K subcarriers on both sides of the signal bandwidth is excessively small, the receiver almost cannot receive the signal as a result of a signal power allocation manner in this solution. In the multipath environment, in this power allocation mode, the power spectrum of the signal still cannot be adjusted based on a channel response, resulting in poor ranging accuracy.

To resolve the foregoing technical problem, embodiments of this application provide a ranging method. The following describes the method provided in embodiments of this application with reference to the accompanying drawings of this specification.

The ranging method provided in embodiments of this application may be applied to various communication systems, for example, an LTE system, a 5G mobile communication system, a communication system evolved after 5G, a Wi-Fi system, or a system integrating a plurality of communication systems. This is not limited in embodiments of this application. 5G may also be referred to as NR.

The ranging method provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine-type communication (massive machine-type communication, mMTC), device to device (device to device, D2D), vehicle to everything (vehicle to everything, V2X), vehicle to vehicle (vehicle to vehicle, V2V), and internet of things (internet of things, IoT).

The following describes the ranging method provided in embodiments of this application by using a communication system shown in FIG. 13 as an example.

FIG. 13 is a diagram of a communication system according to an embodiment of this application. As shown in FIG. 13, the communication system may include:

a first communication apparatus and a second communication apparatus, where the first communication apparatus may be a network device or a terminal, and the second communication apparatus may also be a network device or a terminal; the network device may be a transmitter or a receiver; and the terminal may be a transmitter or a receiver.

It should be noted that FIG. 13 is merely an example framework diagram, and a quantity of nodes included in FIG. 13 and a status of each node are not limited. In addition to the nodes shown in FIG. 13, other nodes such as a core network device, a gateway device, and an application server may be further included. This is not limited. The terminal communicates with the network device in a wired or wireless manner, for example, through a next generation (next generation, NG) interface.

The network device is a device having a wireless transceiver function, and is configured to communicate with a terminal device, or may be a device that enables a terminal device to access a wireless network. The network device may be configured to implement at least one of resource scheduling, radio resource management, and radio resource control of the terminal. Specifically, the network device may include a node (which may also be referred to as a base station, or may also be referred to as a radio access network (radio access network, RAN) node (or device)) in a radio access network, a transmission and reception point (transmission and reception point, TRP), a transmission point (transmission point, TP), or any node in another access node. In embodiments of this application, an apparatus configured to implement a function of the network device may be a network device, or may be an apparatus, for example, a chip system, that can support a network device in implementing the function. The apparatus may be installed in the network device or used in combination with the network device.

Specifically, the network device may be an evolved NodeB (evolved NodeB, eNB or eNodeB) in LTE, a next generation NodeB (next generation NodeB, gNB) in a 5G network or a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a device that implements a base station function in a communication system evolved after 5G, an integrated access and backhaul (integrated access and backhaul, IAB) node, an access point (access point, AP) in a Wi-Fi system, a TRP, a TP, a mobile switching center, and a device that bears a base station function in device-to-device (Device-to-Device, D2D), vehicle-to-everything (vehicle-to-everything, V2X), or machine-to-machine (machine-to-machine, M2M) communication; may further include a central unit (central unit, CU) and a distributed unit (distributed unit, DU) in a cloud access network (cloud radio access network, C-RAN) system, and a network device in a non-terrestrial communication network (non-terrestrial network, NTN) communication system, which may be deployed on a high-altitude platform or a satellite; or may be various devices that form an access node, such as an active antenna processing unit (active antenna unit, AAU) and a baseband unit (baseband unit, BBU). This is not limited in embodiments of this application.

The terminal device in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including indoor or outdoor, handheld, or in-vehicle deployment; may be deployed on water (for example, on a ship); or may be deployed in air (for example, on a plane, a balloon, or a satellite). The terminal device may be a cellular phone, a mobile phone (mobile phone), a tablet computer (pad), a wireless data card, a wireless modem, a satellite terminal, a vehicle-mounted device, a wearable device, an unmanned aerial vehicle, a robot, an intelligent point of sale (point of sale, POS) machine, customer-premises equipment (customer-premises equipment, CPE), a computer with a wireless transceiver function, a virtual reality (virtual reality, VR) terminal device, an augmented reality (augmented reality, AR) terminal device, a terminal device in industrial control (industrial control), a terminal device in self driving (self driving), a terminal device in telemedicine (remote medical), a terminal device in a smart grid (smart grid), a terminal in transportation safety (transportation safety), a terminal device in a smart city (smart city), or a terminal in a smart home (smart home).

In embodiments of this application, an apparatus configured to implement a function of the terminal device may be a terminal, or may be an apparatus, for example, a chip system, that can support a terminal in implementing the function. The apparatus may be installed in the terminal or used in combination with the terminal.

FIG. 14 is a diagram of an interaction procedure of a ranging method according to an embodiment of this application. As shown in FIG. 14, the method may include the following steps.

S141: A network device sends, to a terminal, a second ranging signal and information corresponding to the second ranging signal, and correspondingly, the terminal receives, from the network device, a first ranging signal and the information corresponding to the second ranging signal, where the first ranging signal is formed after the second ranging signal passes through a channel.

The information corresponding to the second ranging signal indicates a time domain sequence or a frequency domain sequence of the second ranging signal, and the first ranging signal is a signal formed after the second ranging signal sent by the network device passes through the channel. The time domain sequence includes a discrete sequence obtained through time and amplitude discretization of the second ranging signal in time domain. The frequency domain sequence includes a resource unit of the second ranging signal in frequency domain and a value corresponding to the resource unit. The time domain sequence or the frequency domain sequence of the second ranging signal is determined based on channel state information obtained by a first communication apparatus through measurement. The channel state information may be obtained by the first communication apparatus through channel estimation.

The resource unit may be one of a subcarrier, a resource block (resource block, RB), a component carrier (component carrier, CC), or a subband (bandwidth partition, BWP).

After step S142 is described, a process of generating the second ranging signal is described.

S142: The terminal performs ranging based on the first ranging signal and the time domain sequence or the frequency domain sequence of the second ranging signal.

The network device and the terminal specify, in advance, time for sending the second ranging signal. The terminal performs a matched filtering operation or another algorithm operation (for example, a Gauss-Newton search method or a maximum-likelihood estimation method) based on the received first ranging signal, estimates a signal propagation delay, and finally calculates a signal propagation distance based on a signal propagation speed and the delay.

In this embodiment of this application, ranging is performed based on the first ranging signal formed after the second ranging signal passes through the channel and the information (which indicates the time domain sequence or the frequency domain sequence) about the second ranging signal. The time domain sequence or the frequency domain sequence is determined based on the channel state information obtained by the first communication apparatus through measurement. In other words, a time domain sequence or a frequency domain sequence of a ranging signal may be dynamically selected based on a channel state, to improve ranging accuracy.

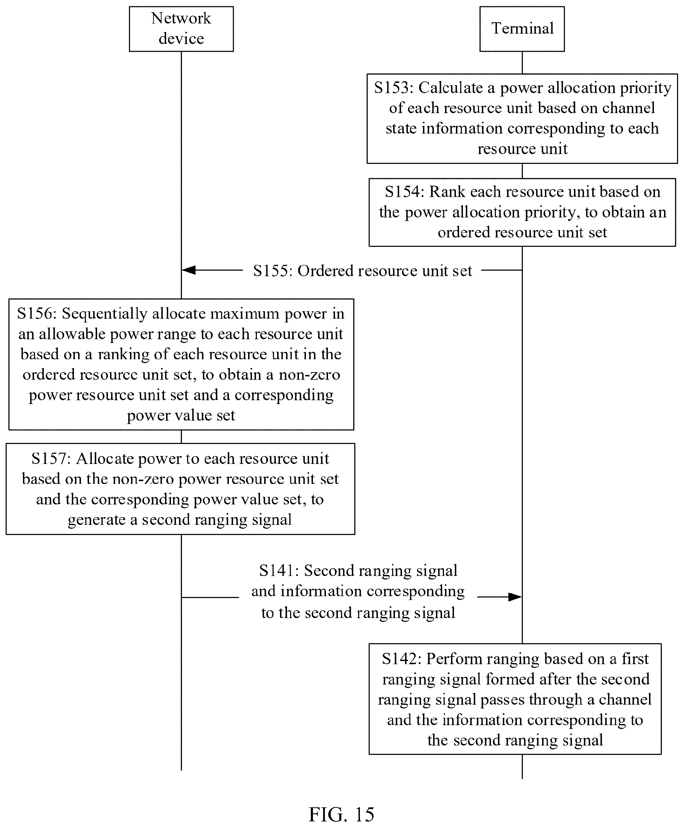

The following describes a process of generating the second ranging signal. As shown in FIG. 15, the terminal first calculates a power allocation priority of each resource unit based on channel state information corresponding to each resource unit, then ranks each resource unit based on the power allocation priority to obtain an ordered resource unit set, and sends the ordered resource unit set to the network device, so that the network device generates the second ranging signal based on the ordered resource unit set. Correspondingly, the method provided in this embodiment of this application may further include the following steps.

S153: The terminal calculates the power allocation priority of each resource unit based on the channel state information corresponding to each resource unit.

The resource unit may be a resource unit pre-allocated by the network device to the terminal, or may be a resource unit in a first resource unit set S1 indicated by the network device.

S154: The terminal ranks each resource unit based on the power allocation priority, to obtain the ordered resource unit set.

The ordered resource unit set indicates the resource unit and the power allocation priority corresponding to the resource unit. For example, based on an existing communication protocol, the terminal usually performs ranging by using one component carrier or one subband, and the terminal usually performs ranging by using a plurality of resource blocks or subcarriers. When the resource unit is a component carrier or a subband, the ordered resource unit set includes a component carrier with a highest priority or a subband with a highest priority; or when the resource unit is a resource block or a subcarrier, the ordered resource unit set includes at least one resource block or subcarrier with a high priority.

In this embodiment of this application, considering that in an actual application scenario, the resource unit may be a subcarrier, a resource block, a component carrier, or a subband, an ordered resource unit set is separately designed for various types of resource units, so that this embodiment of this application may be applicable to a plurality of communication scenarios.

In a possible implementation, considering that some communication systems, for example, an integrated sensing and communication system, have a large limitation on a resource occupied by communication, when there is more than one resource unit in the ordered resource unit set (for example, the resource unit is a resource block or a subcarrier), first information may be preset in the terminal. The first information indicates a maximum quantity of resource units included in the ordered resource unit set, to satisfy a limitation that a communication system has on a resource occupied by communication. Alternatively, the first information may be indicated by the network device to the terminal. That is, the network device sends the first information to the terminal, and correspondingly, the terminal receives the first information.

In this embodiment of this application, the first information is set to limit the maximum quantity of resource units included in the ordered resource unit set and reduce a quantity of ordered resource units in the ordered resource unit set, so that fewer signaling resources are consumed when the ordered resource unit is transmitted, and a communication system that has a large limitation on a resource occupied by communication can be satisfied.

The following separately describes how to calculate the power allocation priority for several cases of the resource unit.

When the resource unit is a subcarrier, the channel state information includes a channel amplitude value $h_k$ at a frequency $f_k$ of each subcarrier, and the power allocation priority $p_k$ of the resource unit may be calculated according to the following formula:

$$p_k = |h_k f_k|$$

When the resource unit is a resource block, a component carrier, or a subband, the channel state information includes a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$p_j = \sum_k h_k^2 f_k^2$$

The power allocation priority may be calculated according to the foregoing formula. Corresponding resource units are sorted from front to back based on power allocation priorities in descending order, to obtain an ordered resource unit set S2.

In this embodiment of this application, a method for calculating the power allocation priority of the resource unit is separately designed based on different types of resource units, so that the method can be applied to a plurality of communication scenarios.

In a possible implementation, the frequency in the foregoing formula may be a baseband frequency, or may be a radio frequency.

A specific frequency to be used for calculation may be preset by the terminal or determined by the terminal. Alternatively, the network device may indicate second information to the terminal, where the second information indicates to use the baseband frequency or the radio frequency.

A common application scenario of the baseband frequency may be an initial measurement phase of a ranging target, where a position of the ranging target is not determined. In this case, ranging is performed by using the baseband frequency. A ranging range is large, and the ranging target can be quickly locked, so that ranging is performed. A common application scenario of the radio frequency may be a continuous measurement phase of the ranging target, where an approximate position of the ranging target is determined. That is, it is considered that a moving distance of the ranging target between current measurement and previous measurement is excessively small. In this case, ranging may be performed by using the radio frequency, and ranging accuracy is high.

S155: The terminal sends the ordered resource unit set to the network device, and correspondingly, the network device receives the ordered resource unit set from the terminal.

The ordered resource unit set is a type of information indicating the resource unit and the power allocation priority corresponding to the resource unit. Information forms of the ordered resource unit set may be various, for example, a table and an ordered resource unit number/index. For example, the ordered resource unit set may be S2={2, 8, 10, 3, 9, 1, 7, 4, 6, 5}, where each item in "2, 8, 10, 3, 9, 1, 7, 4, 6, 5" identifies one resource unit, and an arrangement order in the ordered resource unit set indicates power allocation priorities corresponding to resource units. For example, the priorities are in descending order from front to back, or the priorities are in ascending order from front to back.

S156: The network device sequentially allocates maximum power in an allowable power range to each resource unit based on a ranking of each resource unit in the ordered resource unit set, to obtain a non-zero power resource unit set S3 and a corresponding power value set P3.

For example, a total power limit is 100 mW, and maximum power in the allowable power range is 40 mW. When the ordered resource unit set is S2={2, 8, 10, 3, 9, 1, 7, 4, 6, 5}, the network device first allocates 40 mW power to a resource unit 2, then allocates 40 mW power to a resource unit 8, and finally allocates remaining 20 mW power to a resource unit 10. No power is allocated to other resource units. Finally, a non-zero power resource unit set S3={2, 8, 10} and a corresponding power value set P3={40 mW, 40 mW, 20 mW} are obtained.

The allowable power range may be specified in advance by a communication system, or specified in a protocol.

S157: The network device allocates power to each resource unit based on the non-zero power resource unit set and the corresponding power value set, to generate the second ranging signal. In addition, S141 and S142 are performed.

In this embodiment of this application, the terminal calculates the power allocation priority of each resource unit based on the channel state information corresponding to each resource unit. The channel state information corresponds to a communication feature of the resource unit of the terminal, and is obtained by the terminal through channel estimation. The terminal directly calculates the power allocation priority of each resource unit based on the channel state information. The channel state information based on which calculation is performed is accurate, so that the calculated power allocation priority more conforms to an actual channel state. In addition, the terminal does not need to feed back the channel state information of the resource unit to another device, and feedback overheads are low.

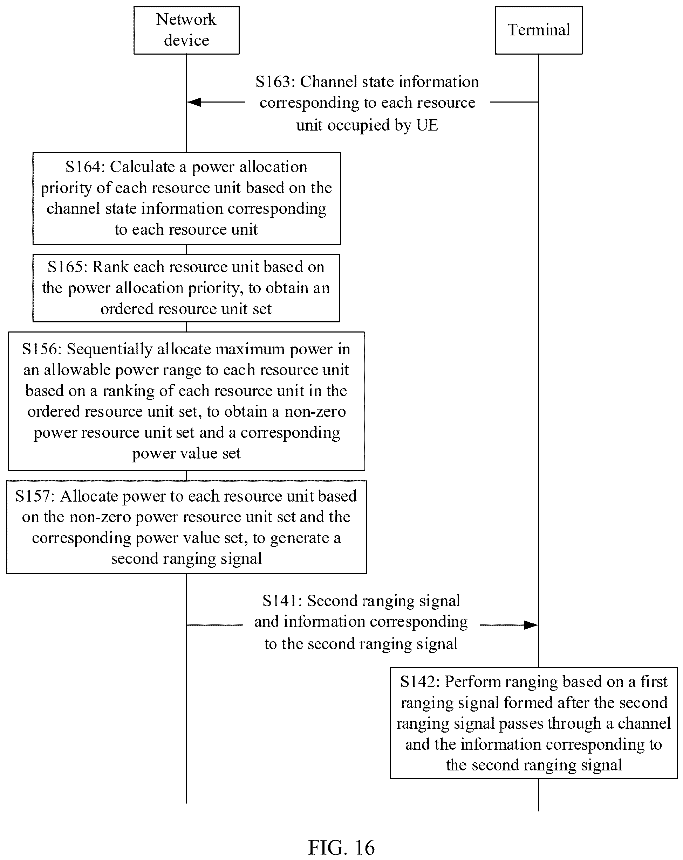

The foregoing mainly describes a scenario in which the ordered resource unit set is generated on a terminal side. In another feasible implementation, the ordered resource unit set may alternatively be generated on a network device side. Compared with generation of the ordered resource unit set on the terminal side, generation of the ordered resource unit set on the network device side has a same generation principle as generation of the ordered resource unit set on the terminal side, except that an execution body and a part of the interaction procedure are changed. The following describes generation of the ordered resource unit set on the network device side in terms of an execution procedure. For a specific generation principle, refer to the descriptions on the terminal side. Details are not described again. Correspondingly, as shown in FIG. 16, the method provided in this embodiment of this application may further include the following steps.

S163: The terminal sends, to the network device, channel state information corresponding to each resource unit occupied by the terminal. Correspondingly, the network device receives the channel state information from the terminal.

S164: The network device calculates a power allocation priority of each resource unit based on the channel state information corresponding to each resource unit.

S165: The network device ranks each resource unit based on the power allocation priority, to obtain an ordered resource unit set.

First information may be preset in the network device. The first information indicates a quantity of resource units that may be included in the ordered resource unit set when there is more than one resource unit in the ordered resource unit set (for example, the resource unit is a resource block or a subcarrier), to satisfy a limitation that a communication system has on a resource occupied by communication.

S163 to S165 may replace S153 to S155 in S153 to S157, and are applicable to performing of subsequent steps.

In this embodiment of this application, the network device calculates the power allocation priority of each resource unit based on the channel state information corresponding to each resource unit. This is compatible with a protocol (or standard) of an existing communication system, and the ranging method provided in this embodiment of this application can be applied provided that the protocol (or standard) of the existing communication system is slightly modified.

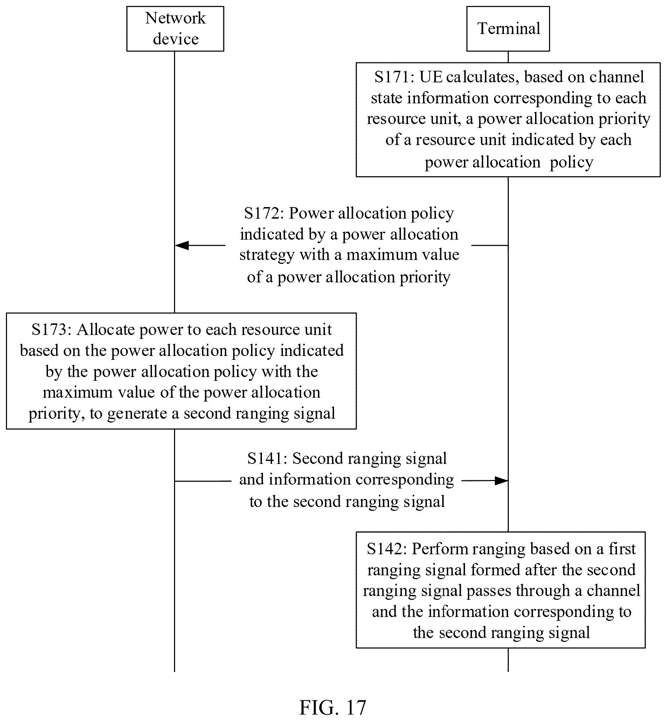

In another possible implementation, the network device or the terminal may prestore a plurality of power allocation policies, select, from the plurality of power allocation policies, a power allocation policy that can maximize a product of a square root of an SNR and a root mean square bandwidth, and use a resource unit indicated by the power allocation policy to generate the time domain sequence or the frequency domain sequence. The following uses an example in which an execution body of selecting the power allocation policy for maximization is the terminal for description. Correspondingly, as shown in FIG. 17, a process of generating the time domain sequence or the frequency domain sequence may include the following steps.

S171: The terminal calculates, based on channel state information corresponding to each resource unit, a power allocation priority of a resource unit indicated by each power allocation policy.

The terminal is preconfigured with power allocation policies q. For example, the power allocation policies q may be shown in Table 1. One or a group of resource units are indicated in {}, where a plurality of power allocation policies q are included. Each power allocation policy q specifies resource units, of a ranging signal, to which power may be allocated and resource units to which no power is allocated. That is, each power allocation policy specifies a set of resource units to which power may be allocated. An index N indicates a corresponding power allocation policy.

Table 1

| Index N | Power allocation policy q | Meaning |
|---|---|---|
| 1 | {1} | Allocated to a resource unit 1 |
| 2 | {2} | Allocated to a resource unit 2 |
| 3 | {3} | Allocated to a resource unit 3 |
| 4 | {1, 2} | Allocated to the resource units 1 and 2 |
| 5 | {2, 3} | Allocated to the resource units 2 and 3 |
| 6 | {1, 3} | Allocated to the resource units 1 and 3 |
| 7 | {1, 2, 3} | Allocated to the resource units 1, 2, and 3 |

Further, the power allocation priority $p_q$ of each power allocation policy q may be calculated according to the following formula:

$$p_q = \sum_k w_k h_k^2 f_k^2$$

k represents a subcarrier number in a resource unit indicated by the power allocation policy, $w_k$ is power allocated to a subcarrier k, $h_k$ is a value of a frequency domain channel H at the subcarrier k, and $f_k$ is a frequency of the subcarrier k.
S172: The terminal sends, to the network device, a power allocation policy indicated by a power allocation policy with a maximum value of a power allocation priority. Correspondingly, the network device receives, from the terminal, the power allocation policy indicated by the power allocation policy with the maximum value of the power allocation priority.
If the network device is also preconfigured with the power allocation policies q shown in Table 1, in S152, an index corresponding to the power allocation policy indicated by the power allocation policy with the maximum value of the power allocation priority may be sent. The network device may determine the corresponding power allocation policy based on the index.
In this embodiment of this application, the terminal sends, to the network device, the power allocation policy indicated by the power allocation policy with the maximum value of the power allocation priority, so that required signaling overheads are low, and channel overheads are reduced.
S173: The network device allocates power to each resource unit based on the power allocation policy indicated by the power allocation policy with the maximum value of the power allocation priority, to generate the second ranging signal. In addition, S141 and S142 are performed.
In this embodiment of this application, the index is sent to indicate the power allocation policy indicated by the power allocation policy with the maximum value of the power allocation priority, so that required signaling overheads are low, and channel overheads are reduced.
In another feasible manner, the execution body of selecting the power allocation policy for maximization may alternatively be the network device. Although the execution body changes, a selection principle of the network device is consistent with that of the terminal, and details are not described again.
To help understand why preferentially allocating power to a resource unit with a high power allocation priority calculated based on channel state information can improve ranging accuracy, the following describes an implementation principle with reference to a channel model.
First, the channel model is described. It is assumed that 1 LOS and $M$ NLOS exist in a channel, a complex gain of each multipath is $\alpha_i$, a delay is $\tau_i$, where $i = 0, 1, ..., M$, time is t, and a unit-impulse function is $\delta(t)$. In this case, a time domain channel is:

$$h(t) = \sum_{i=0}^{M} \alpha_i \delta(t - \tau_i)$$

The multipath delay is divided into two parts: an overall delay and a relative delay. To be specific, an overall delay $\tau_{ref}$ is used as a reference, and

$$\tau_i = \tau_{ref} + \Delta\tau_i$$

13

In this case, the time domain channel may be represented as the following (where * represents convolution):

$$h(t) = \left( \sum_{i=0}^{M} \alpha_i \delta(t - \Delta\tau_i) \right) * \delta(t - \tau_{\mathrm{ref}})$$

A reference time domain channel is defined as:

$$h_{\mathrm{ref}}(t) = \sum_{i=0}^{M} \alpha_i \delta(t - \Delta\tau_i)$$

In this case, the time domain channel may be represented as:

$$h(t) = h_{\mathrm{ref}}(t) * \delta(t - \tau_{\mathrm{ref}}) = h_{\mathrm{ref}}(t - \tau_{\mathrm{ref}})$$

It may be understood that a relationship between the overall delay $\tau_{\mathrm{ref}}$ and the time domain channel and a frequency domain channel is as follows:
$h_{\mathrm{ref}}(t)$ describes a time domain shape of the channel, and $\tau_{\mathrm{ref}}$ is the overall delay of the time domain shape.
Correspondingly, a reference frequency domain channel $H_{\mathrm{ref}}(f)$ is:

$$H_{\mathrm{ref}}(f) = \sum_{i=0}^{M} \alpha_i e^{-j2\pi f \Delta\tau_i}$$

The reference frequency domain channel describes a frequency domain shape of the channel.

$$R(f) = e^{-j2\pi f \tau_{\mathrm{ref}}}$$

describes a phase rotation (phase rotations are different when frequencies are different) brought by $\tau_{\mathrm{ref}}$, where j is an imaginary unit.
Second, a system model is described. It is assumed that a sent signal is $x(t)$, and sending and receiving clocks are synchronized. In this case, a received signal is:

$$y(t) = x(t) * h(t)$$

A receiver uses $x(t)$ to perform matched filtering on $y(t)$, and one or more peak values may be obtained. Each peak value moment corresponds to a delay. When a multipath is distinguishable, each delay corresponds to an estimated value of a multipath delay, and also corresponds to an estimated value of a length of the multipath.
Then, the problem is: Assuming that an actual delay of a multipath is $\tau_{\mathrm{ref}}$, how to optimize $x(t)$ to improve estimation accuracy of $\tau_{\mathrm{ref}}$?
Preliminary analysis is as follows. Because the sending and receiving clocks are synchronized, the receiver may estimate the time domain channel $h(t)$ and the frequency domain channel $H(f)$. The received signal can be decomposed into:

$$y(t) = x(t) * h(t) = x(t) * h_{\mathrm{ref}}(t) * \delta(t - \tau_{\mathrm{ref}}) = z(t) * \delta(t - \tau_{\mathrm{ref}}) = z(t - \tau_{\mathrm{ref}})$$

It can be observed that optimizing $x(t)$ is essentially optimizing $z(t)$, so that accuracy of delay estimation performed by using $x(t)$ is optimal.
The following provides detailed derivation for how to optimize $x(t)$. Based on a CRB, accuracy of delay estimation performed by using $z(t)$ is:

$$\epsilon \propto \frac{1}{\overline{B}\sqrt{\gamma}}$$

$$\overline{B} = \sqrt{\frac{\int_{-\infty}^{\infty}|Z(f)|^2 f^2 df}{\int_{-\infty}^{\infty}|Z(f)|^2 df}}$$ is an RMS bandwidth, where $Z(f)$ is a spectrum of $z(t)$. $\gamma = \frac{\int_{-\infty}^{\infty}|Z(f)|^2 df}{P_n}$ is an SNR, where $P_n$ is noise power.

For convenience of analysis, the system model is changed from a time domain form

$$z(t) = x(t) * h_{ref}(t)$$

to a frequency domain form

$$Z(f) = X(f) \cdot H_{\text{ref}}(f)$$

In this case, minimizing accuracy $\varepsilon$ is equivalent to the following optimization problem about $X(f)$, which is adjusting $X(f)$ to maximize an integral of $|Z(f)|^2 f^2$ in frequency domain. A corresponding formula is:

$$\max_{X(f)} \int_{-\infty}^{\infty} |Z(f)|^2 f^2 df = \max_{X(f)} \int_{-\infty}^{\infty} |X(f)|^2 \cdot |H_{\text{ref}}(f)|^2 f^2 df$$

A typical form of the foregoing optimization problem is that, for a multi-carrier system such as OFDM, minimizing accuracy $\varepsilon$ is to maximize a sum of $w_k h_k^2 f_k^2$ on each subcarrier by adjusting power $w_k$ allocated to a subcarrier $k$. A formula is expressed as follows:

$$\max_{\{w_k\}} \sum_{k} w_k h_k^2 f_k^2$$

$$\sum_{k} w_k = W, w_k \geq 0$$

$k$ is a subcarrier number, $w_k$ is the power allocated to the subcarrier $k$, $h_k$ is an amplitude of a channel at the subcarrier $k$, $f_k$ is a frequency of the subcarrier $k$, and $W$ is a total power limit.

To solve the optimization problem, an obtained power allocation policy is: Power is preferentially allocated to a subcarrier with large $h_k^2 f_k^2$ (where $h_k^2 f_k^2$ is positively correlated with $|h_k f_k|$) under a condition of conforming to a power limitation, so that ranging accuracy $\varepsilon$ can be minimized.

The foregoing mainly describes the solutions provided in embodiments of this application from a perspective of interaction between nodes. It may be understood that, to implement the foregoing functions, the nodes such as a first terminal, a first network device, and a second network device include corresponding hardware structures and/or software modules for performing the functions. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the network device and the terminal may be obtained through division based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely logical function division. In actual implementation, there may be another division manner.

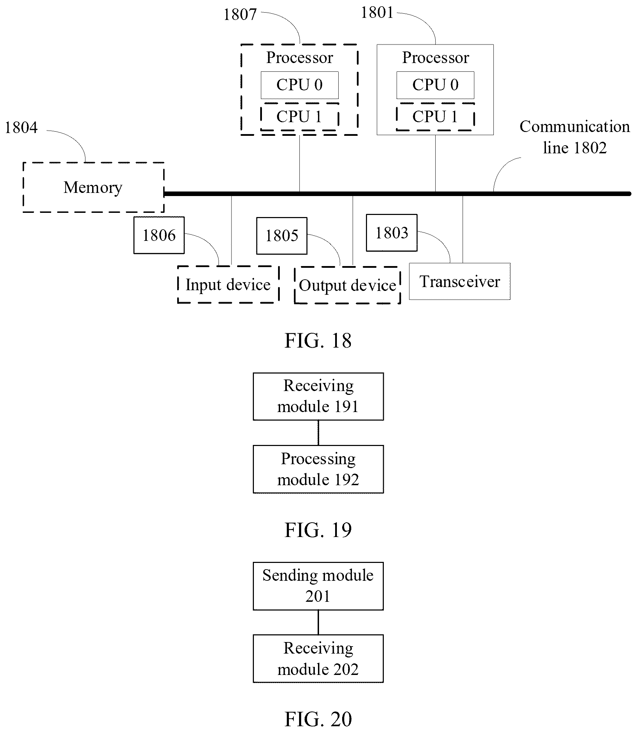

During specific implementation, the network elements shown in this application, for example, the network device and the terminal, may use a composition structure shown in FIG. 18 or include components shown in FIG. 18. FIG. 18 is a diagram of a structure of a communication apparatus according to an embodiment of this application. When the communication apparatus has the functions of the network device in embodiments of this application, the communication apparatus may be a network device, or a chip or a system-on-a-chip in a network device. When the communication apparatus has the functions of the terminal in embodiments of this application, the communication apparatus may be a terminal, or a chip or a system-on-a-chip in a terminal.

As shown in FIG. 18, the communication apparatus may include a processor 1801, a communication line 1802, and a transceiver 1803. The processor 1801, a memory 1804, and the transceiver 1803 may be connected through the communication line 1802. In an example, the processor 1801 may include one or more CPUs, for example, a CPU 0 and a CPU 1 in FIG. 18.

In an optional implementation, the communication apparatus 1800 includes a plurality of processors. For example, in addition to the processor 1801 in FIG. 18, the communication apparatus 1800 may further include a processor 1807.

The processor 1801 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1801 may be another apparatus having a processing function, for example, a circuit, a device, or a software module.

The communication line 1802 is configured to transmit information between components included in the communication apparatus 1800.

The transceiver 1803 is configured to communicate with another device or another communication network. The another communication network may be the Ethernet, a radio access network (radio access network, RAN), a wireless local area network (wireless local area network, WLAN), or the like. The transceiver 1803 may be an interface circuit, a pin, a radio frequency module, a transceiver, or any apparatus that can implement communication.

Further, the communication apparatus 1800 may further include the memory 1804. The memory 1804 is configured to store instructions. The instructions may be a computer program.

The memory 1804 may be a read-only memory (read-only memory, ROM) or another type of static storage device that can store static information and/or instructions, may be a random-access memory (random-access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, a magnetic disk storage medium or another magnetic storage device. The optical disc storage includes a compressed optical disc, a laser disc, an optical disc, a digital versatile disc, a Blu-ray disc, or the like.

It should be noted that the memory 1804 may be independent of the processor 1801, or may be integrated with the processor 1801. The memory 1804 may be configured to store instructions, program code, some data, or the like. The memory 1804 may be located inside the communication apparatus 1800, or may be located outside the communication apparatus 1800. This is not limited. When executing the instructions stored in the memory 1804, the processor 1801 may implement the method provided in embodiments of this application.

In an optional implementation, the communication apparatus 1800 further includes an output device 1805 and an input device 1806. For example, the input device 1806 is a device such as a keyboard, a mouse, a microphone, or a joystick, and the output device 1805 is a device such as a display or a speaker (speaker).

It should be noted that the communication apparatus may be an embedded device, a chip system, or a device having a structure similar to that in FIG. 18. In addition, the composition structure shown in FIG. 18 does not constitute a limitation on the communication apparatus. In addition to the components shown in FIG. 18, the communication apparatus may include more or fewer components than those shown in the figure, or combine some components, or have different component arrangements.

In this embodiment of this application, the chip system may include a chip, or may include a chip and another discrete device.

FIG. 19 is a diagram of a structure of a ranging apparatus. The ranging apparatus is used in a first communication apparatus of a network device. Modules in the apparatus shown in FIG. 19 have functions of implementing corresponding steps in FIG. 14 to FIG. 17, and corresponding technical effect can be achieved. For beneficial effect corresponding to the steps performed by the modules, refer to the descriptions of the corresponding steps in FIG. 14 to FIG. 17. Details are not described again. The functions may be implemented by hardware, or may be implemented by hardware executing corresponding software. The hardware or the software includes one or more modules corresponding to the foregoing functions. The ranging apparatus may include the following modules.

A receiving module 191 is configured to receive, from a second communication apparatus, a first ranging signal and information corresponding to the second ranging signal.

The information indicates a time domain sequence or a frequency domain sequence of the second ranging signal. The time domain sequence or the frequency domain sequence is determined based on channel state information obtained by the first communication apparatus through measurement. The first ranging signal is a signal formed after the second ranging signal sent by the second communication apparatus passes through a channel.

A processing module 192 is configured to perform ranging based on the first ranging signal and the time domain sequence or the frequency domain sequence of the second ranging signal.

In an implementation, the time domain sequence includes a discrete sequence obtained through time and amplitude discretization of the second ranging signal in time domain.

The frequency domain sequence includes a resource unit of the second ranging signal in frequency domain and a value corresponding to the resource unit.

In an implementation, the time domain sequence or the frequency domain sequence of the second ranging signal is determined based on a power allocation priority of a resource unit of the first communication apparatus, and the power allocation priority is determined based on the channel state information corresponding to the resource unit.

In an implementation, the apparatus further includes a sending module. The sending module is configured to send an ordered resource unit set to the second communication apparatus, and the ordered resource unit set indicates the resource unit and the power allocation priority corresponding to the resource unit.

In an implementation, the receiving module 191 is further configured to receive a first resource unit set from the second communication apparatus, and the ordered resource unit set is selected from the first resource unit set.

In an implementation, the resource unit includes any one of the following: a subcarrier, a resource block, a component carrier, and a subband.

In an implementation, when the resource unit is a subcarrier or a resource block, the receiving module 191 is further configured to receive first information from the second communication apparatus.

The first information is used to determine a quantity of subcarriers or a quantity of resource blocks.

In an implementation, when the resource unit is a component carrier or a subband, the ordered resource unit set includes a component carrier with a highest priority or a subband with a highest priority.

In an implementation, when the resource unit is a subcarrier, the channel state information includes a channel amplitude value $h_k$ at a frequency $f_k$ of each subcarrier, and the power allocation priority $p_k$ of the resource unit is calculated according to the following formula:

$$\mathrm{p_k} = |h_k f_k|$$

In an implementation, when the resource unit is a resource block, a component carrier, or a subband, the channel state information includes a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$\mathrm{p_j} = \sum_k h_k^2 f_k^2$$

In an implementation, the frequency is a baseband frequency or a radio frequency. The receiving module 191 is further configured to receive second information from the second communication apparatus.

The second information indicates to use the baseband frequency or the radio frequency to determine a power allocation priority.

FIG. 20 is a diagram of a structure of another ranging apparatus. The ranging apparatus is used in a second communication apparatus of a terminal. Modules in the apparatus shown in FIG. 20 have functions of implementing corresponding steps in FIG. 14 to FIG. 17, and corresponding technical effect can be achieved. For beneficial effect corresponding to the steps performed by the modules, refer to the descriptions of the corresponding steps in FIG. 14 to FIG. 17. Details are not described again. The functions may be implemented by hardware, or may be implemented by hardware executing corresponding software. The hardware or the software includes one or more modules corresponding to the foregoing functions. The ranging apparatus may include the following modules.

A sending module 201 is configured to send, to a first communication apparatus, a second ranging signal and information corresponding to the second ranging signal.

The information indicates a time domain sequence or a frequency domain sequence of the second ranging signal. The time domain sequence or the frequency domain sequence is determined based on channel state information obtained by the first communication apparatus through measurement.

In an implementation, the time domain sequence includes a discrete sequence obtained through time and amplitude discretization of the second ranging signal in time domain. The frequency domain sequence includes a resource unit of the second ranging signal in frequency domain and a value corresponding to the resource unit.

In an implementation, the time domain sequence or the frequency domain sequence of the second ranging signal is determined based on a power allocation priority of a resource unit of the first communication apparatus, and the power allocation priority is determined based on the channel state information corresponding to the resource unit.

In an implementation, the apparatus further includes a receiving module 202. The receiving module 202 is configured to receive an ordered resource unit set from the first communication apparatus, and the ordered resource unit set indicates the resource unit and the power allocation priority corresponding to the resource unit.

In an implementation, the sending module 201 is further configured to send a first resource unit set to the first communication apparatus, and the ordered resource unit set is selected from the first resource unit set.

In an implementation, the resource unit includes any one of the following: a subcarrier, a resource block, a component carrier, and a subband.

In an implementation, the sending module 201 is further configured to: when the resource unit is a subcarrier or a resource block, send first information to the first communication apparatus. The first information is used to determine a quantity of subcarriers or a quantity of resource blocks.

In an implementation, when the resource unit is a component carrier or a subband, the ordered resource unit set includes a component carrier with a highest priority or a subband with a highest priority.

In an implementation, when the resource unit is a subcarrier, the channel state information includes a channel amplitude value $h_k$ at a frequency $f_k$ of each subcarrier, and the power allocation priority $p_k$ of the resource unit is calculated according to the following formula:

$$\mathrm{p_k} = |h_k f_k|$$

In an implementation, when the resource unit is a resource block, a component carrier, or a subband, the channel state information includes a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$\mathrm{p_j} = \sum_k h_k^2 f_k^2$$

In an implementation, the frequency is a baseband frequency or a radio frequency. The sending module 201 is further configured to send second information to the first communication apparatus. The second information indicates to use the baseband frequency or the radio frequency to determine the power allocation priority.

An embodiment of this application further provides a communication system. The communication system is a communication system corresponding to a ranging scenario, and the communication system may include a network device and a terminal. The network device may have a function of the first communication apparatus, and the terminal may have a function of the second communication apparatus.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the terminal apparatus according to any one of the foregoing embodiments, for example, including a data transmitting end and/or a data receiving end. For example, the computer-readable storage medium may be a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may alternatively include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or some of the procedures in the foregoing method embodiments may be completed by the computer instructions instructing related hardware (for example, a computer, a processor, a network device, and a terminal). The program may be stored in the foregoing computer-readable storage medium.

An embodiment of this application further provides a chip system. The chip system may include a chip, or may include a chip and another discrete device. This is not limited. The chip system includes a processor and a transceiver. All or some of the procedures in the foregoing method embodiments may be completed by the chip system. For example, the chip system may be configured to implement functions performed by the network device in the foregoing method embodiments, or implement functions performed by the terminals in the foregoing method embodiments.

In a possible design, the chip system further includes a memory. The memory is configured to store program instructions and/or data. When the chip system runs, the processor executes the program instructions stored in the memory, to enable the chip system to perform functions performed by the network device in the foregoing method embodiments or perform functions performed by the terminals in the foregoing method embodiments.

In embodiments of this application, the processor may be a general-purpose processor, a digital signal processor, a baseband processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of instruction or data structure and that can be accessed by a computer, but is not limited thereto. Alternatively, the memory in embodiments of this application may be a circuit or any other apparatus that can implement a storage function, and is configured to store instructions and/or data.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Unless otherwise specified, "transmission" (transmit/transmission) in embodiments of this application refers to bidirectional transmission, and includes a sending action and/or a receiving action. Specifically, "transmission" in embodiments of this application includes data sending, data receiving, or data sending and receiving. That is, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, "network" and "system" express a same concept, and a communication system is a communication network.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or part of the functions described above.

In several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may be or may not be physically separate, and parts displayed as units may be one or more physical units, may be located in one place, or may be distributed on different places. Some or all of the units may be selected according to actual requirements to achieve the objectives of the solutions of embodiments.

In addition, frequency units in embodiments of this application may be integrated into one processing unit, or each of the units may exist alone physically, or two or more units may be integrated into one unit. The integrated unit may be implemented in a form of hardware, or may be implemented in a form of software frequency unit. When the integrated unit is implemented in the form of software frequency unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of software product. The software product is stored in a storage medium, and includes several instructions for instructing a device, for example, a single-chip microcomputer or a chip, or a processor (processor), to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A ranging method, wherein the method comprises:

   receiving, by a first communication apparatus from a second communication apparatus, a first ranging signal and information corresponding to a second ranging signal, wherein the information indicates a time domain sequence or a frequency domain sequence of the second ranging signal, the time domain sequence or the frequency domain sequence is determined based on channel state information obtained by the first communication apparatus through measurement, and the first ranging signal is a signal formed after the second ranging signal sent by the second communication apparatus passes through a channel; and
   performing ranging based on the first ranging signal and the time domain sequence or the frequency domain sequence of the second ranging signal.

2. The ranging method according to claim 1, wherein the time domain sequence comprises a discrete sequence obtained through time and amplitude discretization of the second ranging signal in time domain; and
   the frequency domain sequence comprises a resource unit of the second ranging signal in frequency domain and a value corresponding to the resource unit.

3. The ranging method according to claim 1, wherein the time domain sequence or the frequency domain sequence of the second ranging signal is determined based on a power allocation priority of a resource unit of the first communication apparatus, and the power allocation priority is determined based on the channel state information corresponding to the resource unit.

4. The ranging method according to claim 3, wherein the method further comprises:
   sending an ordered resource unit set to the second communication apparatus, wherein the ordered resource unit set indicates the resource unit and the power allocation priority corresponding to the resource unit.

5. The ranging method according to claim 4, wherein the method further comprises:

   receiving a first resource unit set from the second communication apparatus, wherein
   the ordered resource unit set is selected from the first resource unit set.

6. The ranging method according to any one of claims 2 to 4, wherein the resource unit comprises any one of the following:
   a subcarrier, a resource block, a component carrier, and a subband.

7. The ranging method according to claim 6, wherein the method further comprises:
   when the resource unit is a subcarrier or a resource block, receiving first information from the second communication apparatus, wherein the first information is used to determine a quantity of subcarriers or a quantity of resource blocks.

8. The ranging method according to claim 4 or 5, wherein when the resource unit is a component carrier or a subband, the ordered resource unit set comprises a component carrier with a highest priority or a subband with a highest priority.

9. The ranging method according to any one of claims 2 to 8, wherein when the resource unit is a subcarrier, the channel state information comprises a channel amplitude value $h_k$ at a frequency $f_k$ of each subcarrier, and the power allocation priority $p_k$ of the resource unit is calculated according to the following formula:

$$p_k = |h_k f_k| \cdot$$

10. The ranging method according to any one of claims 2 to 8, wherein when the resource unit is a resource block, a component carrier, or a subband, the channel state information comprises a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$p_j = \sum_k h_k^2 f_k^2 \cdot$$

11. The ranging method according to claim 9 or 10, wherein the frequency is a baseband frequency or a radio frequency; and the method further comprises: receiving second information from the second communication apparatus, wherein the second information indicates to use the baseband frequency or the radio frequency to determine the power allocation priority.

12. A ranging method, wherein the method comprises:

   generating, by a second communication apparatus, a second ranging signal; and
   sending, by the second communication apparatus to a first communication apparatus, the second ranging signal and information corresponding to the second ranging signal, wherein the information indicates a time domain sequence or a frequency domain sequence of the second ranging signal, and the time domain sequence or the frequency domain sequence is determined based on channel state information obtained by the first communication apparatus through measurement.

13. The ranging method according to claim 12, wherein the time domain sequence comprises a discrete sequence obtained through time and amplitude discretization of the second ranging signal in time domain; and
   the frequency domain sequence comprises a resource unit of the second ranging signal in frequency domain and a value corresponding to the resource unit.

14. The ranging method according to claim 12, wherein the time domain sequence or the frequency domain sequence of the second ranging signal is determined based on a power allocation priority of a resource unit of the first communication apparatus, and the power allocation priority is determined based on the channel state information corresponding to the resource unit.

15. The ranging method according to claim 14, wherein the method further comprises:
   receiving an ordered resource unit set from the first communication apparatus, wherein the ordered resource unit set indicates the resource unit and the power allocation priority corresponding to the resource unit.

16. The ranging method according to claim 15, wherein the method further comprises:
   sending a first resource unit set to the first communication apparatus, wherein the ordered resource unit set is selected from the first resource unit set.

17. The ranging method according to any one of claims 13 to 15, wherein the resource unit comprises any one of the following:
   a subcarrier, a resource block, a component carrier, and a subband.

18. The ranging method according to claim 17, wherein the method further comprises:
   when the resource unit is a subcarrier or a resource block, sending first information to the first communication apparatus, wherein the first information is used to determine a quantity of subcarriers or a quantity of resource blocks.

19. The ranging method according to claim 15 or 16, wherein when the resource unit is a component carrier or a subband, the ordered resource unit set comprises a component carrier with a highest priority or a subband with a highest priority.

20. The ranging method according to any one of claims 13 to 19, wherein when the resource unit is a subcarrier, the channel state information comprises a channel amplitude value $h_k$ at a frequency $f_k$ of each subcarrier, and the power allocation priority $p_k$ of the resource unit is calculated according to the following formula:

$$\mathrm{p_k} = |h_k f_k| \quad .$$

21. The ranging method according to any one of claims 13 to 19, wherein when the resource unit is a resource block, a component carrier, or a subband, the channel state information comprises a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$\mathrm{p_j} = \sum_k h_k^2 f_k^2 \quad .$$

22. The ranging method according to claim 20 or 21, wherein the frequency is a baseband frequency or a radio frequency; and the method further comprises: sending second information to the first communication apparatus, wherein the second information indicates to use the baseband frequency or the radio frequency to determine the power allocation priority.

23. A ranging apparatus, wherein the apparatus comprises:

a receiving module, configured to receive, from a second communication apparatus, a first ranging signal and information corresponding to a second ranging signal, wherein the information indicates a time domain sequence or a frequency domain sequence of the second ranging signal, the time domain sequence or the frequency domain sequence is determined based on channel state information obtained by the first communication apparatus through measurement, and the first ranging signal is a signal formed after the second ranging signal sent by the second communication apparatus passes through a channel; and
a processing module, configured to perform ranging based on the first ranging signal and the time domain sequence or the frequency domain sequence of the second ranging signal.

24. The ranging apparatus according to claim 23, wherein the time domain sequence comprises a discrete sequence obtained through time and amplitude discretization of the second ranging signal in time domain; and the frequency domain sequence comprises a resource unit of the second ranging signal in frequency domain and a value corresponding to the resource unit.

25. The ranging apparatus according to claim 23, wherein the time domain sequence or the frequency domain sequence of the second ranging signal is determined based on a power allocation priority of a resource unit of the first communication apparatus, and the power allocation priority is determined based on the channel state information corresponding to the resource unit.

26. The ranging apparatus according to claim 25, wherein the apparatus further comprises a sending module, the sending module is configured to send an ordered resource unit set to the second communication apparatus, and the ordered resource unit set indicates the resource unit and the power allocation priority corresponding to the resource unit.

27. The ranging apparatus according to claim 26, wherein the receiving module is further configured to receive a first resource unit set from the second communication apparatus, and the ordered resource unit set is selected from the first resource unit set.

28. The ranging apparatus according to any one of claims 24 to 26, wherein the resource unit comprises any one of the following:
a subcarrier, a resource block, a component carrier, and a subband.

29. The ranging apparatus according to claim 28, wherein when the resource unit is a subcarrier or a resource block, the receiving module is further configured to receive first information from the second communication apparatus; and the first information is used to determine a quantity of subcarriers or a quantity of resource blocks.

30. The ranging apparatus according to claim 26 or 27, wherein when the resource unit is a component carrier or a subband, the ordered resource unit set comprises a component carrier with a highest priority or a subband with a highest priority.

31. The ranging apparatus according to any one of claims 24 to 30, wherein when the resource unit is a subcarrier, the channel state information comprises a channel amplitude value $h_k$ at a frequency $f_k$ of each subcarrier, and the power allocation priority $p_k$ of the resource unit is calculated according to the following formula:

$$\mathrm{p_k} = |h_k f_k| \quad .$$

32. The ranging apparatus according to any one of claims 24 to 30, wherein when the resource unit is a resource block, a component carrier, or a subband, the channel state information comprises a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$\mathrm{p_j} = \sum_k h_k^2 f_k^2 \quad .$$

33. The ranging apparatus according to claim 31 or 32, wherein the frequency is a baseband frequency or a radio frequency; and the receiving module is further configured to receive second information from the second communication apparatus, wherein the second information indicates to use the baseband frequency or the radio frequency to determine the power allocation priority.

34. A ranging apparatus, wherein the apparatus comprises:
a sending module, configured to send, to a first communication apparatus, the second ranging signal and information corresponding to the second ranging signal, wherein the information indicates a time domain sequence or a frequency domain sequence of the second ranging signal, and the time domain sequence or the frequency domain sequence is determined based on channel state information obtained by the first communication apparatus through measurement.

35. The ranging apparatus according to claim 34, wherein the time domain sequence comprises a discrete sequence obtained through time and amplitude discretization of the second ranging signal in time domain; and
the frequency domain sequence comprises a resource unit of the second ranging signal in frequency domain and a value corresponding to the resource unit.

36. The ranging apparatus according to claim 34, wherein the time domain sequence or the frequency domain sequence of the second ranging signal is determined based on a power allocation priority of a resource unit of the first communication apparatus, and the power allocation priority is determined based on the channel state information corresponding to the resource unit.

37. The ranging apparatus according to claim 36, wherein the apparatus further comprises a receiving module, the receiving module is configured to receive an ordered resource unit set from the first communication apparatus, and the ordered resource unit set indicates the resource unit and the power allocation priority corresponding to the resource unit.

38. The ranging apparatus according to claim 37, wherein the sending module is further configured to send a first resource unit set to the first communication apparatus, and the ordered resource unit set is selected from the first resource unit set.

39. The ranging apparatus according to any one of claims 35 to 37, wherein the resource unit comprises any one of the following:
a subcarrier, a resource block, a component carrier, and a subband.

40. The ranging apparatus according to claim 39, wherein the sending module is further configured to: when the resource unit is a subcarrier or a resource block, send first information to the first communication apparatus; and the first information is used to determine a quantity of subcarriers or a quantity of resource blocks.

41. The ranging apparatus according to claim 37 or 38, wherein when the resource unit is a component carrier or a subband, the ordered resource unit set comprises a component carrier with a highest priority or a subband with a highest priority.

42. The ranging apparatus according to any one of claims 35 to 41, wherein when the resource unit is a subcarrier, the channel state information comprises a channel amplitude value $h_k$ at a frequency $f_k$ of each subcarrier, and the power allocation priority $p_k$ of the resource unit is calculated according to the following formula:

$$p_k = |h_k f_k| \cdot$$

43. The ranging apparatus according to any one of claims 35 to 41, wherein when the resource unit is a resource block, a component carrier, or a subband, the channel state information comprises a channel amplitude value $h_k$ at a frequency $f_k$ of each subcarrier in the resource block, the component carrier, or the subband, and a power allocation priority $p_j$ of the resource block, the component carrier, or the subband is calculated according to the following formula:

$$p_j = \sum_k h_k^2 f_k^2 \quad.$$

44. The ranging apparatus according to claim 42 or 43, wherein the frequency is a baseband frequency or a radio frequency; and the sending module is further configured to send second information to the first communication apparatus, wherein the second information indicates to use the baseband frequency or the radio frequency to determine the power allocation priority.

45. A communication apparatus, wherein the communication apparatus comprises a processor, and the processor is configured to enable, by running computer instructions and/or by using a logic circuit, the communication apparatus to perform the method according to any one of claims 1 to 22.

46. The apparatus according to claim 45, wherein the communication apparatus further comprises a memory, and the memory is configured to store the computer instructions and/or a configuration file of the logic circuit.

47. The apparatus according to claim 45 or 46, wherein the communication apparatus further comprises a transceiver, and the transceiver is configured to receive and/or send a signal.

48. A computer-readable storage medium, wherein the computer-readable storage medium comprises computer instructions; and when the computer instructions are run, the method according to any one of claims 1 to 22 is performed.

49. A computer program product comprising instructions, wherein when the computer program product is run on a computer, the method according to any one of claims 1 to 22 is performed.

50. A communication system, wherein the communication system comprises a first communication apparatus and a second communication apparatus; and
the first communication apparatus is configured to perform the method according to any one of claims 1 to 11, and the second communication apparatus is configured to perform the method according to any one of claims 12 to 22.

FIG. 1

FIG. 2

FIG. 3

FIG. 4

FIG. 5

FIG. 6

FIG. 7

FIG. 8

FIG. 9

FIG. 10

Frequency

A minimum
SRS periodicity
is one slot

Sounding reference signal SRS

Slot

| SRS | SRS | SRS | SRS | SRS | SRS | SRS | SRS |

| SRS | SRS | SRS | SRS | SRS | SRS | SRS | SRS |

| SRS | SRS | SRS | SRS | SRS | SRS | SRS | SRS |

| SRS | SRS | SRS | SRS | SRS | SRS | SRS | SRS |

...

Time

Frequency

Positioning reference signal PRS

A minimum PRS periodicity is four slots

Slot    Slot    Slot    Slot

■ PRS

▯ Data, other reference signals,
or leaving blank

...

Time

FIG. 11

FIG. 12

FIG. 13

FIG. 14

Network
device

Terminal

S153: Calculate a power allocation priority
of each resource unit based on channel
state information corresponding to each
resource unit

S154: Rank each resource unit based on
the power allocation priority, to obtain an
ordered resource unit set

S155: Ordered resource unit set

S156: Sequentially allocate maximum power in
an allowable power range to each resource unit
based on a ranking of each resource unit in the
ordered resource unit set, to obtain a non-zero
power resource unit set and a corresponding
power value set

S157: Allocate power to each resource unit
based on the non-zero power resource unit set
and the corresponding power value set, to
generate a second ranging signal

S141: Second ranging signal
and information corresponding
to the second ranging signal

S142: Perform ranging based on a first
ranging signal formed after the second
ranging signal passes through a channel
and the information corresponding to
the second ranging signal

FIG. 15

Network
device

Terminal

S163: Channel state information
corresponding to each resource
unit occupied by UE

S164: Calculate a power allocation
priority of each resource unit based on the
channel state information corresponding
to each resource unit

S165: Rank each resource unit based on
the power allocation priority, to obtain an
ordered resource unit set

S156: Sequentially allocate maximum power in
an allowable power range to each resource unit
based on a ranking of each resource unit in the
ordered resource unit set, to obtain a non-zero
power resource unit set and a corresponding
power value set

S157: Allocate power to each resource unit based
on the non-zero power resource unit set and the
corresponding power value set, to generate a
second ranging signal

S141: Second ranging signal
and information corresponding
to the second ranging signal

S142: Perform ranging based on a first
ranging signal formed after the second
ranging signal passes through a channel
and the information corresponding to
the second ranging signal

FIG. 16

| Network device | | Terminal |
|---|---|---|

S171: UE calculates, based on channel state information corresponding to each resource unit, a power allocation priority of a resource unit indicated by each power allocation policy

S172: Power allocation policy indicated by a power allocation strategy with a maximum value of a power allocation priority

S173: Allocate power to each resource unit based on the power allocation policy indicated by the power allocation policy with the maximum value of the power allocation priority, to generate a second ranging signal

S141: Second ranging signal and information corresponding to the second ranging signal

S142: Perform ranging based on a first ranging signal formed after the second ranging signal passes through a channel and the information corresponding to the second ranging signal

FIG. 17

EP 4 589 328 A1

FIG. 18

FIG. 19

FIG. 20

## INTERNATIONAL SEARCH REPORT

| International application No. |
|---|
| **PCT/CN2022/125485** |

### A. CLASSIFICATION OF SUBJECT MATTER

G01S5/12(2006.01)i

According to International Patent Classification (IPC) or to both national classification and IPC

### B. FIELDS SEARCHED

Minimum documentation searched (classification system followed by classification symbols)

IPC: G01S5; H04L27

Documentation searched other than minimum documentation to the extent that such documents are included in the fields searched

Electronic data base consulted during the international search (name of data base and, where practicable, search terms used)

CNTXT, CNKI, ENTXTC, VEN: 华为, 测距, 测量, 距离, 信道, 频域, 时域, 频率, 信道状态, 功率, 分配, 配比, 优先级, 幅度, 幅值, 有序; HUA WEI, distance, length, measur+, detect+, channel, time, field, frequency, CSI, channel signal information, power, distribut+, priority, amplitude, order+

### C. DOCUMENTS CONSIDERED TO BE RELEVANT

| Category* | Citation of document, with indication, where appropriate, of the relevant passages | Relevant to claim No. |
|---|---|---|
| X | CN 112055982 A (BEIJING XIAOMI MOBILE SOFTWARE CO., LTD.) 08 December 2020 (2020-12-08)<br>description, paragraphs 51-155 and 187-262, and figures 2, 7, and 9-12 | 1-2, 6-7, 12-13, 17-18, 23-24, 28-29, 34-35, 39-40, 45-50 |
| A | CN 112995081 A (HUAWEI TECHNOLOGIES CO., LTD.) 18 June 2021 (2021-06-18)<br>entire document | 1-50 |
| A | CN 110088644 A (LION GROUP, INC.) 02 August 2019 (2019-08-02)<br>entire document | 1-50 |
| A | CN 107015196 A (HARBIN INSTITUTE OF TECHNOLOGY) 04 August 2017 (2017-08-04)<br>entire document | 1-50 |
| A | CN 109874134 A (CHONGQING GUGENG TECHNOLOGY CO., LTD.) 11 June 2019 (2019-06-11)<br>entire document | 1-50 |
| A | US 2010272043 A1 (LG ELECTRONICS INC.) 28 October 2010 (2010-10-28)<br>entire document | 1-50 |

☑ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 June 2023** | **30 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/125485** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020235875 A1 (SONY CORP.) 23 July 2020 (2020-07-23)<br>entire document | 1-50 |

Form PCT/ISA/210 (second sheet) (July 2022)

**EP 4 589 328 A1**

<table>
<tr><td colspan="3">INTERNATIONAL SEARCH REPORT<br>Information on patent family members</td><td colspan="2">International application No.<br>**PCT/CN2022/125485**</td></tr>
</table>

| Patent document cited in search report | | | Publication date (day/month/year) | Patent family member(s) | | | Publication date (day/month/year) |
|---|---|---|---|---|---|---|---|
| CN | 112055982 | A | 08 December 2020 | WO | 2022027477 | A1 | 10 February 2022 |
| CN | 112995081 | A | 18 June 2021 | US | 2022299629 | A1 | 22 September 2022 |
| | | | | WO | 2021115217 | A1 | 17 June 2021 |
| CN | 110088644 | A | 02 August 2019 | WO | 2018094229 | A1 | 24 May 2018 |
| | | | | US | 2021270931 | A1 | 02 September 2021 |
| | | | | US | 11493592 | B2 | 08 November 2022 |
| | | | | AU | 2022283747 | A1 | 02 February 2023 |
| | | | | EP | 3542180 | A1 | 25 September 2019 |
| | | | | AU | 2017362444 | A1 | 23 May 2019 |
| | | | | AU | 2017362444 | B2 | 08 September 2022 |
| | | | | CA | 3043645 | A1 | 24 May 2018 |
| | | | | US | 2018136309 | A1 | 17 May 2018 |
| | | | | US | 10989788 | B2 | 27 April 2021 |
| CN | 107015196 | A | 04 August 2017 | None | | | |
| CN | 109874134 | A | 11 June 2019 | None | | | |
| US | 2010272043 | A1 | 28 October 2010 | WO | 2010123241 | A2 | 28 October 2010 |
| | | | | US | 8644331 | B2 | 04 February 2014 |
| | | | | JP | 2012521711 | A | 13 September 2012 |
| | | | | KR | 20100116529 | A | 01 November 2010 |
| US | 2020235875 | A1 | 23 July 2020 | WO | 2019096138 | A1 | 23 May 2019 |
| | | | | US | 2023064870 | A1 | 02 March 2023 |
| | | | | US | 11552756 | B2 | 10 January 2023 |
| | | | | EP | 3703272 | A1 | 02 September 2020 |

Form PCT/ISA/210 (patent family annex) (July 2022)